# EUROPÄISCHE PATENTSCHRIFT

(11) **EP 1 762 791 B1**
(45) Veröffentlichungstag und Bekanntmachung des Hinweises auf die Patenterteilung: **01.04.2009**
(21) Anmeldenummer: 06018506.3
(22) Anmeldetag: 05.09.2006
(51) Int. Cl.: F24H 8/00, E03C 1/29

(54) **Behälterteil zur Abführung von Kondensat aus einem Siphon in eine Abwasserleitung**
Container for removing condensate from a siphon into a waste water conduit
Réceptacle pour purger des condensats à partir d'un siphon dans un conduit pour eaux usées

(30) Priorität: 12.09.2005 AT 14872005
(43) Veröffentlichungstag der Anmeldung: 14.03.2007
(73) Patentinhaber: Vaillant GmbH, 42859 Remscheid (DE)
(72) Erfinder: Lemke, Matthias, 42369 Wuppertal (DE)
(74) Vertreter: Hocker, Thomas

(56) Entgegenhaltungen:
- DE-A1- 3 931 746
- DE-A1- 19 757 069
- DE-U1- 29 808 173

## Beschreibung

Die vorliegende Erfindung betrifft ein Behälterteil zur Abführung von Kondensat aus einem Siphon in eine Abwasserleitung, wobei das Behälterteil als optionales Bauelement in den Siphon eingebaut werden kann und eine Anwendung vorzugsweise in Heizungen, insbesondere Brennwertgeräten, findet.

Grundsätzlich besteht ein Siphon aus zwei, meist miteinander über Schraubverbindungen oder Bajonettverschluss befestigten Teilen, einem oberen Kondensatzuführteil und einem unteren Kondensatauffangbehälter. Zur besseren Verständlichkeit wird nachfolgend ersteres als Siphonoberteil und letzteres als Siphonunterteil bezeichnet.

Siphons dienen in Heizgeräten zum Auffangen von sich in einem Wärmetauscher und der angeschlossenen Abgasleitung bildenden Kondensat. Das Kondensat wird hierbei über eine dichte Kondensatleitung von einer den Wärmetauscher umschließenden Wärmetauscherschale zu einem Siphon geführt. Gleichzeitig muss der Austritt von Abgasen über den Siphon vermieden werden. Dies wird über eine sich im Siphon stets befindende Kondenswassersäule bewerkstelligt. Betriebsbedingt nachströmendes Kondensat verdrängt etwa die gleiche Menge an Kondensflüssigkeit aus dem, im Querschnitt U-förmigen, Siphonunterteil, die über geeignete Leitungen mit Hilfe der Schwerkraft einer Abwasserleitung zugeführt wird.

Aus dem Gebrauchsmuster DE 298 08 173 U1 ist ein derartiger Siphon bekannt, bei dem das Siphonoberteil den Siphon-Einlauf und Siphon-Auslauf enthält. Das Siphonunterteil besteht aus einem zylindrischen Gefäß, das mit dem Oberteil verschraubt werden kann.

Ist das Abwassersystem vom Heizgerät weit entfernt oder befindet es sich oberhalb des Heizgerätes, kann eine Abführung des Kondensats über die Schwerkraft nicht mehr gewährleistet werden. Aus diesem Grund kommen Pumpen zum Einsatz, welche außerhalb des Heizgerätes an die Kondensatabführung angeschlossen werden und das Kondensat in ein geeignetes Abwassersystem befördern.

Aus DE 39 31 746 A1 ist ein Kondensatsammelbehälter mit Neutralisationseinrichtung und Kondensatpumpe zum Fördern des neutralisierten Kondensats in das öffentliche Abwassernetz bekannt. Der Sammelbehälter ist außerhalb einer Verbrennungseinrichtung angeordnet. Die DE 197 57 069 A1 zeigt ebenfalls einen Kondensatsammelbehälter für Brennwertkessel mit Kondensatpumpe, die über einen Schwimmerschalter einbeziehungsweise ausgeschaltet wird.

Die aus dem Stand der Technik bekannten Siphons oder Kondensatsammelbehälter eignen sich nicht für den nachträglichen Umbau üblicher Siphons von Brennwertheizgeräten.

Aufgabe der vorliegenden Erfindung ist es, das Problem der Überwindung von Höhendifferenzen bei der Flüssigkeitsabführung aus einem Siphon in ein Abwassersystem, insbesondere für im Keller aufgestellte Heizgeräte, durch ein an oder in den Siphon montierbares Behälterteil kostengünstig, baulich einfach und sicher zu lösen.

Erfindungsgemäß ist obige Aufgabe durch die Merkmale des Anspruchs 1 gelöst.

Weitere vorteilhafte Ausgestaltungen ergeben sich aus den Unteransprüchen und den Ausführungsbeispielen von Pumpenvorrichtungen gemäß vorliegender Erfindung. In der Zeichnung zeigen:
Fig. 1 einen Siphon gemäß dem Stand der Technik mit einem Siphonober- und einem Siphonunterteil
Fig. 2 einen Siphonoberteil
Fig. 3 einen Siphonunterteil
Fig. 4 das erfindungsgemäße Behälterteil
Fig. 5 einen Siphon mit eingebautem erfindungsgemäßem Behälterteil
Fig. 6 einen Siphon mit verkürztem deckelartigen Siphonunterteil
Fig. 7 einen Siphon mit in den Siphonunterteil integrierten Behälterteil
Fig. 8 einen Siphon mit einem Anbauflansch für das erfindungsgemäße Behälterteil

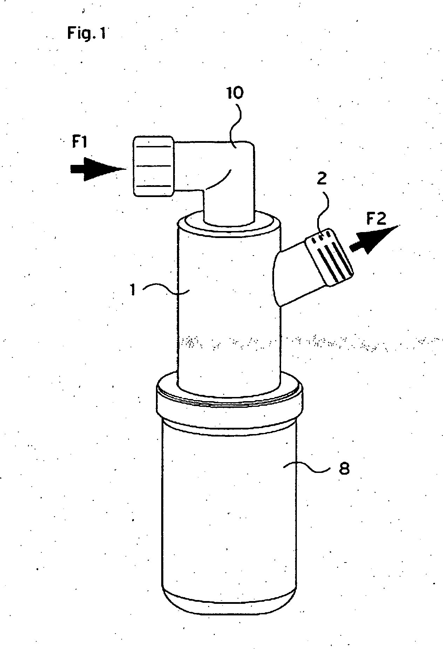

Figur 1 stellt einen Siphon gemäß dem Stand der Technik dar. Der Siphon besteht dabei aus einem Siphonober- 1 und einem Siphonunterteil 8. Die Befestigung des Siphonober- 1 mit dem Siphonunterteil 8 wird vorzugsweise über eine dichte Schraub- und/oder Steck- und/oder Clipverbindung bewerkstelligt. Der Einbau von dichtenden Elementen, wie beispielsweise O-Ringen, zwischen den Siphonteilen 1 und 8 kann die Dichtheit zusätzlich erhöhen. Über den Siphon-Einlauf 10 erfolgt eine Anbindung des Siphons an eine Kondensatabführung beispielsweise einer Wärmetauscherschale eines Heizgerätes (nicht dargestellt). Der Siphon kann natürlich auch an andere prozessbedingt Kondensat bildende Geräte angeschlossen werden. Das über den Siphon-Einlauf 10 zugeführte Kondensat F1 wird im Siphonunterteil 8 aufgefangen, der in seiner Form einem Becher ähnlich ist. Das zugeführte Kondensat F1 staut sich im Siphon an, bis es eine Höhe erreicht, die oberhalb des unteren Randes der Öffnung des Siphon-Auslaufs 2 liegt. Auf diese Weise fließt das angestaute Kondensat F2 über die Schwerkraft in eine an den Siphon-Auslauf 2 angeschlossene Kondensatabführung (nicht dargestellt), welche schließlich in ein Abwassersystem mündet.

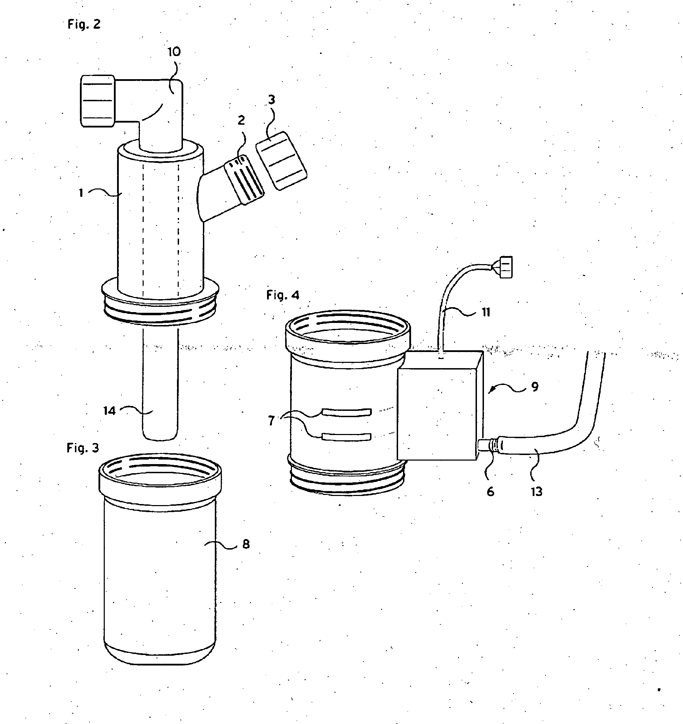

In Figur 2 ist das weiter oben bereits erwähnte Siphonoberteil 1 separat abgebildet. Die separate Darstellung dient der besseren Verdeutlichung seines Aufbaus. Der Siphon-Auslauf 2 kann bei Bedarf mit einem passenden Deckel 3 dicht verschlossen werden. Auch hierfür eignen sich vor allem Schraubverbindungen, wobei abdichtende Elemente ein unbeabsichtigtes Austreten von Kondensflüssigkeit zuverlässig vermeiden. Alternativ zu Schraubverbindungen können das Siphonoberteil 1 und das Siphonunterteil auch mittels Bajonettverschluss verbunden sein.

Das Siphonunterteil 8 ist ebenfalls separat in Figur 3 dargestellt. Hierbei erkennt man seine becherförmige Struktur zum auffangen und sammeln zugeleiteten Kondensats. Das Innengewinde am oberen Rand des Siphonunterteils 8 dient der Verschraubung mit dem Siphonoberteil 1 über dessen sich am unteren Rand befindende Außengewinde.

Figur 4 visualisiert eine mögliche Ausführungsform des erfindungsgemäßen Behälterteils 9. Das Behälterteil 9 umfasst dabei mindestens einen, vorzugsweise zwei über- bzw. hintereinander angeordnete Messfühler bzw. Sensoren 7, welche mit einer Steuer- bzw. Regelelektronik 4 verbunden sind. Die Sensoren können sich dabei auf der Innen- oder Außenseite des Behälterteils 9 befinden. Die Steuer- bzw. Regelelektronik 4 ist über mindestens eine geeignete Leitung 11 mit der Hauptplatine des entsprechenden Gerätes verbindbar ausgelegt. An die Steuer- bzw. Regelelektronik 4 ist eine Pumpe 5 angeschlossen. Das Behälterteil 9 ist über einen Anschlussstutzen 6 und eine Kondensatleitung 13 an ein geeignetes Abwassersystem (nicht dargestellt) angebunden.

Die Erstreckungsrichtung der vorzugsweise streifenförmigen Sensoren 7 kann neben der dargestellten horizontalen Ausführung auch vertikal sein. Für die nähere Beschreibung wird, wie auch in den Figuren abgebildet, von einer horizontalen Lage der Sensoren 7 ausgegangen. Die Funktionsweise ist für eine vertikale Anordnung jedoch die gleiche.

Die Sensoren 7, welche zweckmäßigerweise aus elektrisch leitenden Drähten oder Streifen bestehen, erfassen die Füllstandhöhe der Kondensflüssigkeit im Siphon über eine kapazitive Widerstandsmessung. Das Funktionsprinzip der Sensoranordnung kommt dem eines Kondensators mit zwei parallel gegenüberliegenden Platten gleich. In einem Wechselstromkreis mit konstanter Frequenz f, ist der kapazitive Blindwiderstand X_{C} eines Plattenkondensators lediglich von der Kapazität C des Kondensators entsprechend der Formel X_{C}=1/(2*π*f*C) abhängig. Das Medium zwischen den Platten eines Kondensators, auch Dielektrikum genannt, beeinflusst dessen Kapazität nach folgender Formel C=E₀*Eᵣ*A/d, wobei E₀ die Dielektrizitätskonstante, Eᵣ die spezifische Dielektrizitätszahl, A die Oberfläche der Kondensatorplatten sowie d der Plattenabstand ist.

Übertragen auf die vorliegende Erfindung heißt dies, dass eine Änderung der Kondensathöhe im Siphon eine Änderung der spezifischen Dielektrizitätszahl Er zwischen den beiden Sensoren 7 bewirkt. Erhöht sich beispielsweise durch eine zunehmende Flüssigkeitshöhe die Kapazität, so sinkt der kapazitive Blindwiderstand. Nimmt die Kapazität hingegen ab, steigt der kapazitive Blindwiderstand aufgrund der umgekehrten Proportionalität von Kapazität C und kapazitivem Blindwiderstand X_{C} (X_{C} ~ 1/C). Diese Änderung des kapazitiven Blindwiderstandes X_{C} wird durch die Sensoren 7 erfasst und der Steuer- bzw. Regelelektronik 4 gemeldet.

Nimmt die Füllhöhe des Kondensats bis zum oberen Sensor 7 zu, erreicht die Kapazität C in Abhängigkeit von der spezifischen Dielektrizitätszahl Eᵣ des Dielektrikums einen Höchst- oder Tiefstwert. Damit erreicht der kapazitive Blindwiderstand X_{C} unter Beachtung der oben genannten umgekehrten Proportionalität einen Tiefst- oder Höchstwert. Die Widerstandswerte werden vorzugsweise dauerhaft oder aber zyklisch an die Steuer- bzw. Regelelektronik 4 gesandt. Bei einer ursprünglich durchgeführten Kalibrierung werden bei bestimmten Füllhöhen Widerstandswerte gemessen und in der Steuer- bzw. Regelelektronik 4 gespeichert. Anhand dieser Werte kann der Kondenswasserstand im Siphon determiniert werden. Falls der kapazitive Blindwiderstand X_{C} einen gespeicherten Schwellwert und folglich die Flüssigkeit eine maximale Höhe erreicht hat, setzt die Steuer- bzw. Regelelektronik 4 die Pumpe 5 in Betrieb. Die Pumpe 5 fördert das Kondensat über die Kondensatleitung 13 aus dem Siphon und führt es einem geeigneten, nicht dargestellten, Abwassersystem zu. Der Betrieb der Pumpe 5 wird so lange aufrechterhalten, bis ein anderer Schwellwert des kapazitiven Blindwiderstandes X_{C} erreicht ist, der eine minimale Füllhöhe widerspiegelt. Diese minimale Füllhöhe ist beispielsweise dann erreicht, falls der Kondensatspiegel auf die Höhe der Oberkante des Kondensatauslasses des Behälterteils 9 gesunken ist. Zu beachten ist, dass der Druck aus der Abgasleitung die minimale notwendige Füll- bzw. Sperrwasserhöhe bestimmt, um ein Ausblasen des Siphons zu verhindern. Beim Ausblasen des Siphons wird durch den Abgasdruck das Kondensat durch den Siphon gedrückt, so dass keine Sperrwirkung mehr vorhanden ist und Abgas austreten kann.

Die oben beschriebene Steuer- bzw. Regelelektronik 4 arbeitet separat, kann aber zusätzlich an die zentrale Rechen- und Datenverarbeitungseinheit eines Heizgerätes angeschlossen werden. Ein Vorteil ist hierbei in der stärkeren Integration des Behälterteils 9 in die Diagnoseroutine der Heizungselektronik zu sehen. Im Falle einer Störung in der Steuer- bzw. Regelelektronik 4, kann die zentrale Rechen- und Datenverarbeitungseinheit eingreifen und entsprechende Heizgerätfunktionen einleiten. Ebenso kann auf diese Weise ein Fachmann über die Telekommunikationsmöglichkeiten des Heizgerätes bezüglich des Ausfalls der Steuer- bzw. Regelelektronik in Kenntnis gesetzt werden.

Der Datenaustausch zwischen der Steuer- bzw. Regelelektronik 4 und der zentralen Rechen- und Datenverarbeitungseinheit kann drahtlos mittels Bluetooth, Infrarot, Funk oder anderweitiger zur drahtlosen Kommunikation geeigneter elektromagnetischer Wellen erfolgen. Auch ist eine drahtgebundene, auf elektrischen oder optischen Signalen basierende, Form der Datenkommunikation realisierbar. Natürlich können sowohl drahtlose als auch drahtgebundene Kommunikationsformen koexistieren, um anhand dieser Redundanz die Sicherheit gegenüber einem Ausfall des Behälterteils 9 zu erhöhen.

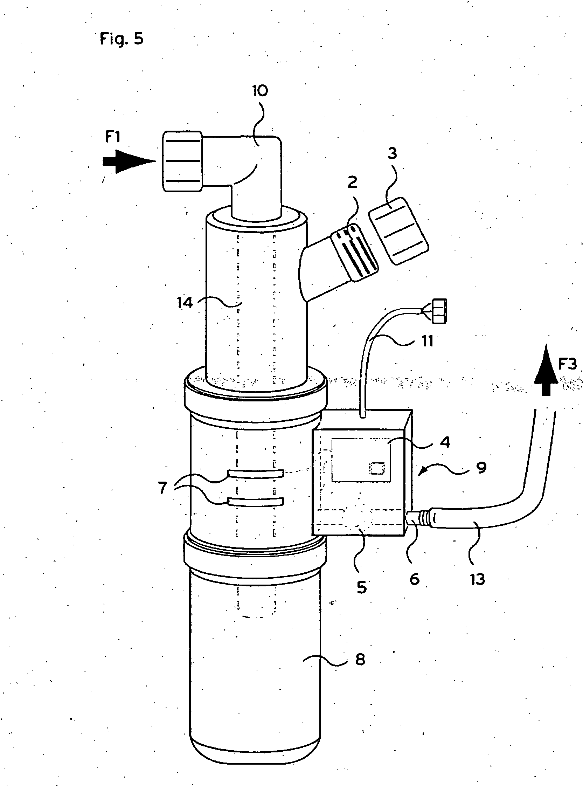

Figur 5 veranschaulicht einen eingebauten erfindungsgemäßen Behälterteil 9 in einen bestehenden Siphon. Bei der Nachrüstung eines Siphons mit dem erfindungsgemäßen Behälterteil 9 sollte der ursprüngliche Siphon-Auslauf 2 des Siphonoberteils 1 vorzugsweise über eine Schraubverbindung mit einem geeigneten Deckel 3 dicht verschlossen werden. Denn die Kondensatabführung geschieht nunmehr über die Kondensatleitung 13, dargestellt durch den Pfeil F3.

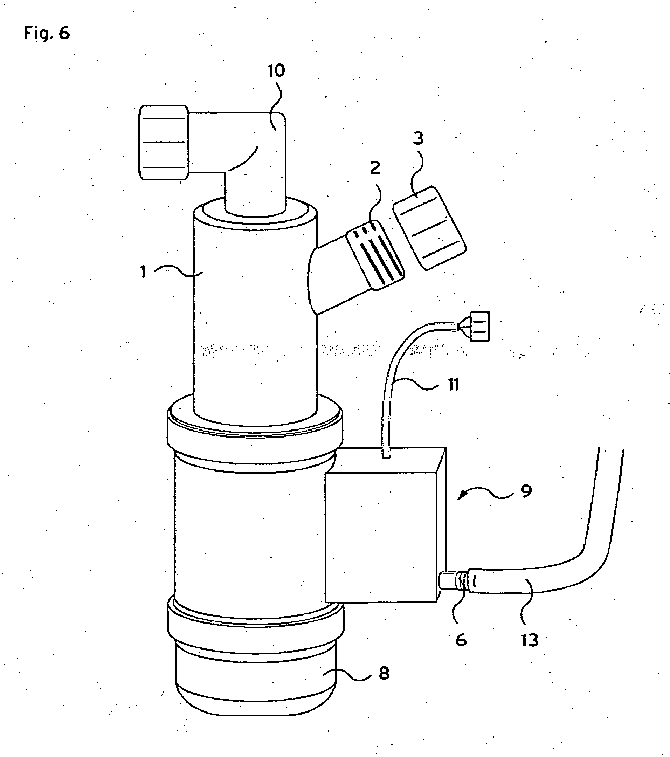

In Figur 6 ist, ebenso wie in Figur 5, eine eingebaute erfindungsgemäße Behälterteil 9 abgebildet. Das Siphonunterteil 8 fällt jedoch kürzer aus. Diese Maßnahme ermöglicht einen problemlosen Einbau, da die ursprünglichen Abmessungen des Siphons nach wie vor eingehalten werden. Vorteilhaft bei dieser Ausführung sind die leichtere Reinigung und die Befreiung des Siphonunterteils 8 von Ablagerungen aufgrund der besseren Zugänglichkeit.

Das Behälterteil 9 kann in einer vorteilhaften Ausführung als integrativer Bestandteil von Siphonober- 1 und/oder Siphonunterteil 8 ausgebildet sein; d.h. das Behälterteil 9 und Siphonober- 1 und/oder Siphonunterteil 8 bilden eine Einheit, so dass ein zusätzliches Bauelement, wie in Fig. 4 dargestellt, eingespart werden kann. Dies führt zu einer vorteilhaften Reduzierung der Abmessungen des Siphons aufgrund des Wegfalls eines Bauteils und ermöglicht folglich den Einbau des erfindungsgemäßen Behälterteils 9 selbst in platzkritischen Geräten.

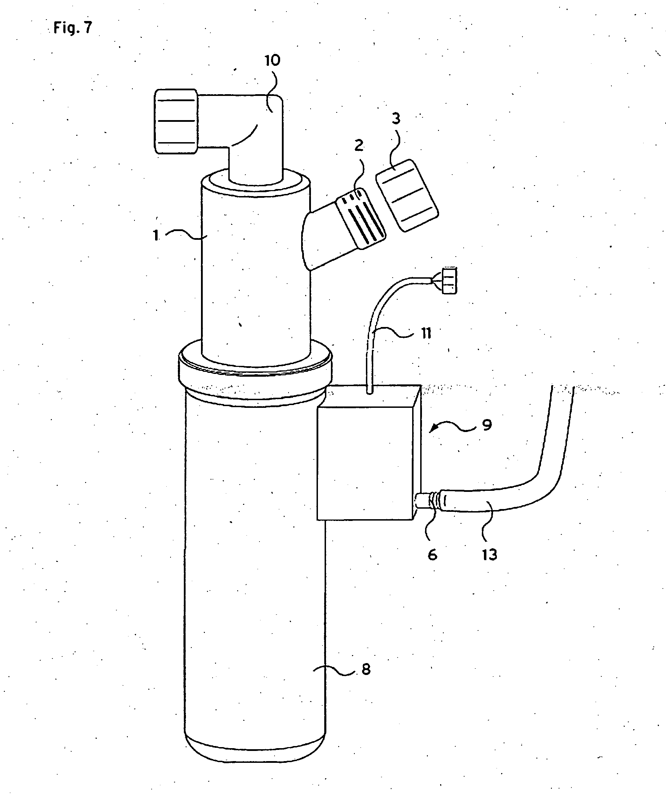

Figur 7 verdeutlicht die oben erwähnte integrative Bauform von Siphonoberteil 1 sowie Siphonunterteil 8 und Behälterteil 9. Das Behälterteil 9 ist im vorliegenden Fall mit dem Siphonunterteil 8 förmlich verschmolzen. Bei einer Nachrüstung von bspw. Heizgeräten mit einem erfindungsgemäßen Behälterteil 9, kann der Installateur auf einfache und bequeme Weise das bestehende Siphon unterteil 8 vom Siphonoberteil 1 lösen und das Behälterteil 9, als integrativen Bestandteil eines Siphonunterteils 8, an das Siphonoberteil 1 montieren. Das Siphonunterteil 8 kann dabei, je nach dem Platzangebot im einzubauenden Gerät, in der Länge variiert werden. Vorteilhaft ist, dass durch die nunmehr geringere Anzahl an Verbindungsstellen, die Gefahr einer undichten Stelle im Siphon verringert wird. Ferner erspart die Ausführung gemäß Fig. 7 einen Arbeitsschritt. Denn nach der Anbringung des Behälterteils 9, bedarf es keiner abschließenden Montage des anfänglich demontierten Siphonunterteils 8.

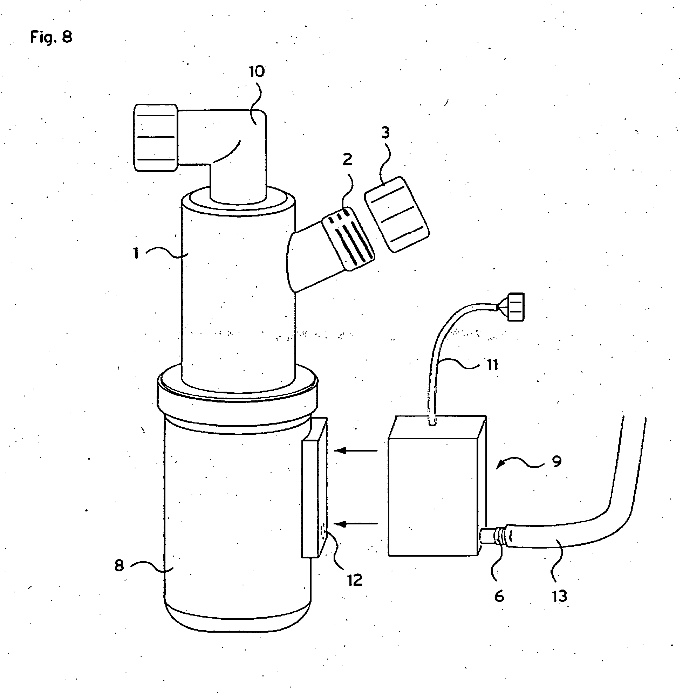

Optional kann, wie in Figur 8 dargestellt, das Siphonunterteil 8 mit einem Flansch versehen sein, an welchen bei Bedarf das Behälterteil 9 in Form einer Clip-, Schraub-, Bajonette- und/oder Steckverbindung angebracht werden kann. Der Flansch und das Siphonunterteil 8 sind vorzugsweise als ein Bauteil ausgebildet. Mit anderen Worten ist der Flansch nicht als massives Element an das Siphonunterteil 8 nachträglich montiert. Der Flansch ist im Bereich des Kondensataustritts 12 vorzugsweise dünnwandig beschaffen, da dies eine leichtere Montage des Behälterteils 9 ermöglicht. Das Behälterteil 9 enthält vorzugsweise auf der Montageseite in Höhe des Kondensataustritts 12 einen Dorn, mit dem der Kondensataustritt 12 durch Anpressen des Behälterteils 9 an diesen durchstochen wird. Die Sensoren 7, welche prinzipiell aus elektrisch leitenden Drähten oder Streifen bestehen, können bereits auf dem Flansch vorzugsweise mit vertikaler Ausrichtung angebracht sein. Die Sensoren 7 sind vorzugsweise am Behälterteil 9 angebracht. Selbstverständlich kann auch eine horizontale Anordnung der Sensoren 7 für das geschilderte Ausführungsbeispiel des erfindungsgemäßen Behälterteils 9 Anwendung finden.

## Patentansprüche

1. Siphon mit mindestens einem Siphonoberteil (1), welches über einen Siphon-Einlauf (10) verfügt, und einem Siphonunterteil (8) sowie einem Siphon-Auslauf (2), **dadurch gekennzeichnet, dass** ein Behälterteil (9) zwischen Siphonoberteil (1) und Siphonunterteil (8) angeordnet ist, wobei der Behälterteil (9) über eine Pumpe (5) und mindestens einen den Füllstand detektierenden Sensor (7) verfügt.

2. Siphon nach Anspruch 1, **dadurch gekennzeichnet, dass** in dem Behälterteil (9) eine mit dem mindestens einen den Füllstand detektierenden Sensor (7) verbundene Steuer- oder Regelelektronik (4) zur Steuerung oder Regelung der Pumpe (5) integriert ist.

3. Siphon nach einem der Ansprüche 1 oder 2, **dadurch gekennzeichnet, dass** eine externe mit dem mindestens einen den Füllstand detektierenden Sensor (7) verbundene Steuer- oder Regelelektronik zur Steuerung oder Regelung der Pumpe (5) verwendet wird.

4. Siphon nach einem der Ansprüche 1 bis 3, **dadurch gekennzeichnet, dass** das Behälterteil (9) Mittel zur drahtlosen und/oder drahtgebundenen Übersendung von Messwerten an die zentrale Rechen- und Datenverarbeitungseinheit des Gerätes enthält, in dem das Behälterteil (9) seinen Einsatz findet.

5. Verfahren zum Betreiben eines Siphons mit mindestens einem Siphonoberteil (1), welches über einen Siphon-Einlauf (10) verfügt, einem Siphonunterteil (8), einem Siphon-Auslauf (2) und einem zwischen Siphonoberteil (1) und Siphonunterteil (8) angeordneten Behälterteil (9), der über eine Pumpe (5) und mindestens einen den Füllstand detektierenden Sensor (7) verfügt, **dadurch gekennzeichnet, dass** der Sensor (7) die Füllstandshöhe der Kondensatflüssigkeit im Siphon erfasst und die Pumpe (5) bei Erreichen einer vorgegebenen Kondensathöhe in Betrieb geht und bei Unterschreitung einer anderen vorgegebenen Kondensathöhe abgeschaltet wird.

## Claims

1. A siphon comprising at least one siphon upper member (1) provided with a siphon inlet (10), and a siphon lower member (8) and a siphon outlet (2), **characterised in that** a container member (9) is arranged between the siphon upper member (1) and the siphon lower member (8), with the container member (9) containing a pump (5) and at least one liquid level detecting sensor (7).

2. A siphon as claimed in Claim 1, **characterised in that** an open or closed loop electronic control system for controlling the pump (5), such control system being combined with the at least one liquid level detecting sensor (7), is integrated into the container member (9).

3. A siphon as claimed in any of the Claims 1 or 2, **characterised in that** an external open or closed loop electronic control system combined with the at least one liquid level detecting sensor (7) is used for controlling the pump (5).

4. A siphon as claimed in any of the Claims 1 to 3 **characterised in that** the container member (9) comprises means for the wireless and/or wire bound transmission of measured values to the central processor and data processing unit of the equipment in which the container member (9) is used.

5. A process for the operation of a siphon having at least one siphon upper member (1) provided with a siphon inlet (10), and further having a siphon lower member (8), a siphon outlet (2), and a container member (9) arranged between the siphon upper member (1) and the siphon lower member (8), such container member (9) comprising a pump (5) and at least one liquid level detecting sensor (7), **characterised in that** the sensor (7) senses the level of the liquid condensate in the siphon and that the pump (5) is put in operation when the condensate reaches a predetermined upper level and is switched off when the condensate falls below a predetermined lower level.

## Revendications

1. Siphon, avec au moins une partie supérieure de siphon (1) qui dispose d'une admission de siphon (10), et avec une partie inférieure de siphon (8) ainsi qu'une évacuation de siphon (2), **caractérisé en ce qu'**un élément formant réceptacle (9) est disposé entre la partie supérieure de siphon (1) et la partie inférieure de siphon (8), sachant que l'élément formant réceptacle (9) dispose d'une pompe (5) et d'au moins un capteur (7) détectant le niveau de remplissage.

2. Siphon selon la revendication 1, **caractérisé en ce qu'**un équipement électronique de commande ou de régulation (4), relié au(x) capteur(s) (7) détectant le niveau de remplissage, est intégré dans l'élément formant réceptacle (9) pour commander ou réguler la pompe (5).

3. Siphon selon la revendication 1 ou 2, **caractérisé en ce qu'**un équipement électronique externe de commande ou de régulation, relié au(x) capteur(s) (7) détectant le niveau de remplissage, est utilisé pour commander ou réguler la pompe (5).

4. Siphon selon l'une des revendications 1 à 3, **caractérisé en ce que** l'élément formant réceptacle (9) comprend des moyens pour la transmission sans fil et/ou filaire de valeurs de mesure à l'unité centrale de calcul et de traitement de données de l'appareil dans lequel est utilisé l'élément formant réceptacle (9).

5. Procédé d'exploitation d'un siphon avec au moins une partie supérieure de siphon (1) qui dispose d'une admission de siphon (10), avec une partie inférieure de siphon (8), avec une évacuation de siphon (2) et avec un élément formant réceptacle (9) disposé entre la partie supérieure de siphon (1) et la partie inférieure de siphon (8), élément qui dispose d'une pompe (5) et d'au moins un capteur (7) détectant le niveau de remplissage, **caractérisé en ce que** le capteur (7) détecte le niveau de remplissage des condensats liquides dans le siphon, et la pompe (5) entre en service à l'atteinte d'un niveau prédéfini de condensats et est désactivée lorsque le niveau tombe en dessous d'un autre niveau prédéfini de condensats.
